(19) **Europäisches Patentamt European Patent Office Office européen des brevets**

(11) **EP 1 817 908 B1**

(12) **EUROPEAN PATENT SPECIFICATION**

(45) Date of publication and mention
of the grant of the patent:
**22.12.2010 Bulletin 2010/51**

(51) Int Cl.:
**H04N 7/167** *(2006.01)*   **G11B 27/00** *(2006.01)*
**G06K 9/00** *(2006.01)*

(21) Application number: **04805898.6**

(22) Date of filing: **30.11.2004**

(86) International application number:
**PCT/GB2004/005031**

(87) International publication number:
**WO 2006/059053 (08.06.2006 Gazette 2006/23)**

(54) **System, method for video fingerprinting**

System und Verfahren für Video-Fingerabdrücke

Systeme et procede pour empreinte video

(84) Designated Contracting States:
**AT BE BG CH CY CZ DE DK EE ES FI FR GB GR
HU IE IS IT LI LU MC NL PL PT RO SE SI SK TR**

(43) Date of publication of application:
**15.08.2007 Bulletin 2007/33**

(73) Proprietor: **The University Court of the University
of St.
Andrews
St. Andrews,
Fife KY16 9AJ (GB)**

(72) Inventor: **BATEMAN, Martin
School of Computer Science
University of St Andrews
Fife KY16 9SX (GB)**

(74) Representative: **Kinsler, Maureen Catherine
Marks & Clerk LLP
Aurora
120 Bothwell Street
Glasgow
G2 7JS (GB)**

(56) References cited:
**WO-A-02/51063     US-A1- 2003 185 417**

• **PATENT ABSTRACTS OF JAPAN vol. 2003, no.
12, 5 December 2003 (2003-12-05) & JP 2004
288281 A (SONY CORP; SONY PICTURES
ENTERTAINMENT), 14 October 2004 (2004-10-14)**

**Description**

The present invention relates to a system and method for fingerprinting a video and subsequently using that fingerprint to identify copies of original video files.

With the growth in both bandwidth and peer-to-peer applications, there has been an explosion in the number of movie files being copied across the Internet. Some sources claim that up to sixty percent of traffic is now made up of peer-to-peer traffic, and a significant amount of this is movie files, which have been illegally copied from authentic sources. As a result, copyright owners are losing a large amount of money through lost royalty payments. Legal action against the peer-to-peer network owners does little to discourage copyright infringement since if one network is closed down then another one appears.

Conventionally, there are four sources of illegal movie downloads available on peer-to-peer systems. A first example is derived from a hand-held video camera that is taken into a movie theatre and used to record the movie as it is being projected on to the screen. "Starwars Episode 1: The Phantom Menace" was copied in this manner and available on the internet within one week of the US box office release. These recordings typically have the lowest audio and visual quality. Alternatively, movies may be recorded from broadcast television. These typically already include visual watermarks in the form of television station logos. This type of video file can range in quality since it may have been recorded from a noisy analogue signal. However, increasingly it will be taken from a digital source such as a cable or satellite station broadcasting using MPEG-2. Another source of illegal movie files is referred to as a "screener". These are copies of previews of an unreleased movie that are issued to critics and censors, for example. Finally, an illegal copy of a film may be made from retail versions of digital versatile discs (DVDs), which have been sold to the public. These are typically the highest quality copies as a large amount of time can be taken to encode the media from a clean source.

To counteract the many and varied ways for copying and distributing movies illegally, various digital fingerprinting techniques have been developed. Digital fingerprinting is a form of digital watermarking, which typically involves embedding data within a document to uniquely identify the copyright holder. Known techniques for video watermarking have emerged from techniques developed for still images. One of these techniques treats the video as a series of still images and adapts existing watermarking schemes from still images to video. For example, the technique identified in "Real-time labelling of MPEG-2 compressed video" by Langelaar et al, Journal of Visual Communication and Image Representation 9, 4 (1998), pp 256-270, the contents of which are incorporated herein by reference in their entirety, describes a method that has been extended to video by watermarking the 1-frames of an MPEG stream. While such watermarking techniques inherit all the experience from still image based techniques, they are processor intensive and so not ideal for dealing with large quantities of data.

As well as using still images, the temporal aspect of video has been exploited in various watermarking techniques. For example the article "Watermarking of uncompressed and compressed video" by Hartung et al, Signal Processing 66, 3 (1998), pp 283-216, the contents of which are incorporated herein by reference in their entirety, describes a method in which a watermark is spread over a number of frames. This method permits higher robustness, although it can be computationally expensive. Another known technique considers the video as a compressed data stream. A technique of this nature is described in the article "Proposal of a watermarking technique for hiding/retrieving data in compressed and decompressed video" by Jordan et al, *isoliee July 1997* the contents of which are incorporated herein by reference in their entirety. This proposal describes a method that embeds watermark information into motion vectors of the encoded video. In particular, motion vectors pointing to flat areas are modified in a pseudorandom way. Advantages of this method are that it does not introduce any visible artefacts and the embedded information can be retrieved directly from the motion vectors as long as the video is in its compressed form. After the video has been decompressed, the video must be recompressed for detection of the watermark. This works because during the recompression process the motion vectors are found with a high enough probability to statistically recover the watermark. This is a simple mechanism that makes real-time detection possible. However, a problem with this approach is that the watermark may be tied to a specific video CODEC and therefore may not survive transcoding.

Just as there are people wishing to identify the owners of media there are groups that wish to obscure the origins, typically by attacking the watermark. In the article "Spread Spectrum Watermarking: Malicious attacks and counter attacks" SPIE Security and Watermarking of Multimedia Contents 99 (San Jose, CA1999), the contents of which are incorporated herein by reference in their entirety, Hartung et al present four different types of attack upon digital watermarks. The first of these are so called 'simple attacks' - sometimes also called 'waveform attacks' or 'noise attacks'. These attempt to impair the detection of the embedded watermark without identifying and isolating it. Examples include linear and general non-linear filtering, waveform-based compression (JPEG, MPEG), addition of noise, addition of offset, cropping, quantisation in the pixel domain, conversions to analogue, and gamma correction. Other attacks include 'detection-disabling attacks' - sometimes called 'synchronization attacks'. These attempt to break the correlation and to make recovery of the watermark difficult if not impossible. This type of attack is performed normally by geometric distortion, for example zooming, shift in spatial or temporal direction, rotation, shear, cropping, pixel permutation, sub-sampling, removal or insertion of pixels or pixel clusters. In contrast, 'ambiguity attacks' - sometimes called 'deadlock', 'inversion', 'fake watermark' or 'fake original' attacks - attempt to confuse the detection process by producing fake original data or fake watermarked data. An example is an attack that attempts to discredit the authority of the watermark by embedding one or more additional watermarks so that it is unclear which was first. The final category of attacks is 'removal attacks', which involve attempting to analyze and identify the watermark and then separate it from the host data. The watermark is then discarded. Examples of this form of attack are collusion attacks, denoising certain non-linear filter operations or compression attacks using synthetic modelling.

Benchmarking tools have been created to automate the process of evaluating watermarking techniques, see for example "Attacks on Copyright Marking Systems" by Petitcolas et al Information Hiding, Second International Workshop IH '98 (Portland Oregon, 1998) Auesmith D., (Ed), Springer-Verlag, pp 219-239, the contents of which are incorporated herein by reference in their entirety. These are non-hostile processing mechanisms that can be applied to video. They are not designed to obfuscate or remove watermarks but may have that side effect. These are the processing mechanisms to which video being transported over peer-to-peer networks will have normally been exposed. Photometric attacks are those that modify the pixels of the video in some way. For example, when an analogue television signal is broadcast, the pixels may be changed because of noise. This may alter the colour of some portions of the image. Spatial de-synchronisation also changes the pixels. This is performed when the display format of a video is changed. The most common examples of this are changes in aspect ratio (4:3, 16:9, etc.) or changes in the spatial resolution (PAL, NTSC or SECAM). Temporal de-synchronisation is another technique that changes pixels. This is performed when a modification is made to the frame-rate of the movie. This may be done to reduce the file size, for example a 30 frames per second (fps) movie being reduced to 24 fps or lower. Another example is video editing. This encompasses all operations that may be made by a video editor. A simple and common example is cut-insert-splice. This is when a cut is made in the video, a commercial is inserted and the remaining video is spliced together. Other possibilities are the addition of logos or subtitles, or the cutting of certain scenes from a film perhaps to enable broadcast before a watershed.

A problem with traditional methods for automatically identifying video is that they either rely on the video bit-stream remaining the same throughout its lifetime or require additional information to be stored within the video. Video streams are quite often re-encoded when either new or improved video CODECs are released, as in the case of DivX and XviD, or in order to reduce file size for easier transport across the network or to fit on certain media. This can completely defeat the identification process or increase the difficulty of identification as in the case of watermarking. In addition, since there are many video files infringing copyright that have not been encoded and released on to the Internet, it is too late to embed additional information into the video for identification purposes. Hence conventional techniques cannot be applied.

WO 02/51063 describes a method for deriving and utilizing a fingerprint representing a content item, which fingerprint is derived from the content item itself. The method involves generating dividing the content signal into at least one set; transforming the set into a frequency-based domain; determining features of the transformed set; and grouping the features so as to form a content signature of the set. A problem with this method is that it is sensitive to scaling, such as magnification, rotation and distortion.

US 2003/0185417 describes a fingerprinting technique in which a hash for a video is a waveform constructed from statistics of each frame in the video. These statistics can be represented compactly as a vector of the changes in the statistic from frame to frame in a video sequence, such as a Group of Pictures (GOP) in a video coding format like MPEG. Examples of the statistics that can be used for the fingerprint include the frame average for luminance and the variance. For compressed streams, fingerprints can be extracted from among other things the motion vectors. A problem with a method that uses motion vectors is that it can only be used for compressed video, as motion vectors are only associated with compressed streams. They are not calculated or associated with uncompressed streams, Also, motion vectors are dependent on the encoder used, which means that when an unknown, compressed video is captured, it can be difficult to determine the motion vectors accurately.

Various aspects of the invention are defined in the independent claims. Some preferred features are defined in the dependent claims.

Various aspects of the invention will now be described by way of example only and with reference to the accompanying drawings, of which:

Figure 1 is flow diagram of the steps for creating a motion fingerprint;
Figure 2 is view of a single frame of a video;
Figure 3 is fingerprint of the video of Figure 2;
Figure 4 is a flow diagram of a detection process for detecting whether two videos are the same;
Figure 5 shows various images of degraded video frames;
Figure 6 is a plot of a measure of a difference between two video motion fingerprints as a function of bit-rate;
Figure 7 is a plot of a measure of a difference between two video motion fingerprints as a function of frame-rate;
Figure 8 is a plot of a measure of a difference between two video motion fingerprints as a function of a change in brightness, and
Figure 9 is a plot of a measure of a difference between two video motion fingerprints as a function of border size.

The video identification technique proposed herein uses the human perception system as a guide of how to recognize movie files. In particular, motion within a movie is used as the basis for a digital fingerprint. Often people are willing to reduce spatial and visual quality in order to maintain a temporal resolution above the level of persistence of motion so that the video motion does not appear jerky. The invention uses this to its advantage when identifying videos.

### Video Motion Fingerprinting

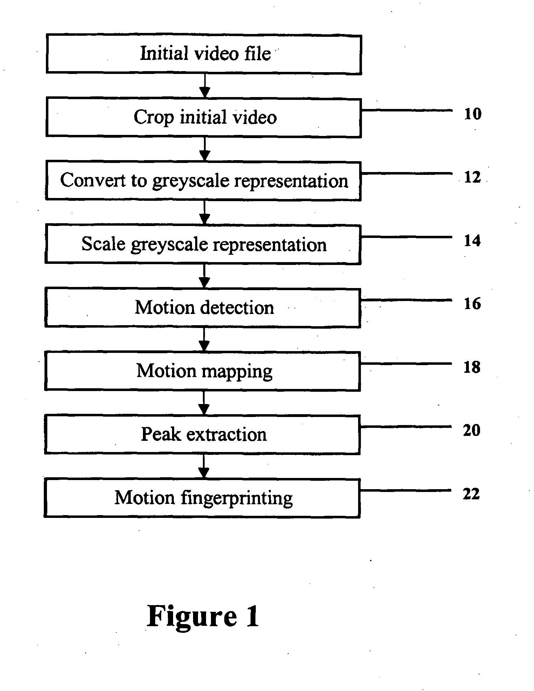

Figure 1 shows various steps for fingerprinting a video by identifying motion within it. Typically these would be implemented using computer software, although of course hardware implementations would be possible. Firstly, the video is cropped to a standard aspect ratio 10. A good choice of aspect ratio would be 4:3, because all videos can be cropped to fit into this ratio while having most of the video visible. Next the video is converted to a greyscale representation 12. In the case of RGB, the luminance value of each pixel is calculated in order to get the greyscale value for the entire frame. This can be determined using the following equation:

$$luminance = (0.299 \text{ x } red) + (0.587 \text{ x } green) + (0.224 \text{ x } blue)$$

For YUV only the luminance (Y channel) would be used. The use of greyscale reduces the amount of data to be processed and therefore speeds up the scaling and motion detection processes. Greyscale also removes subtle differences in colour that may be present due to capturing or encoding.

Once the video is processed and represented by a greyscale equivalent, its spatial resolution is then scaled to a standard size 14. VideoCD (VCD) resolution (352x240) was chosen as the standard size for experimentation since it gives a reasonable resolution of image on which the motion detection can take place whilst having a sufficiently small amount of data to prevent the motion detection process from being processor intensive. It should be noted that although Figure 1 shows these steps in a specific order, changing this would not fundamentally alter the fingerprinting process.

After scaling, the motion detection test is applied 16. This involves comparing each frame against the previous frame. Differences between the two are flagged as motion. This could be done by comparing every pixel of one frame with every pixel of the next frame. However this is relatively processor intensive and so instead in a preferred method, pixels are grouped together into macro-blocks of a pre-determined size, for example 5x5 pixels, and the average colour/luminance of these areas is calculated. Motion is detected as a change in the colour between frames within a macro-block, while the magnitude of the motion is deduced from the difference in colour. This reduces the possibility of wrongful detection of motion due to encoding artefacts or a noisy data source.

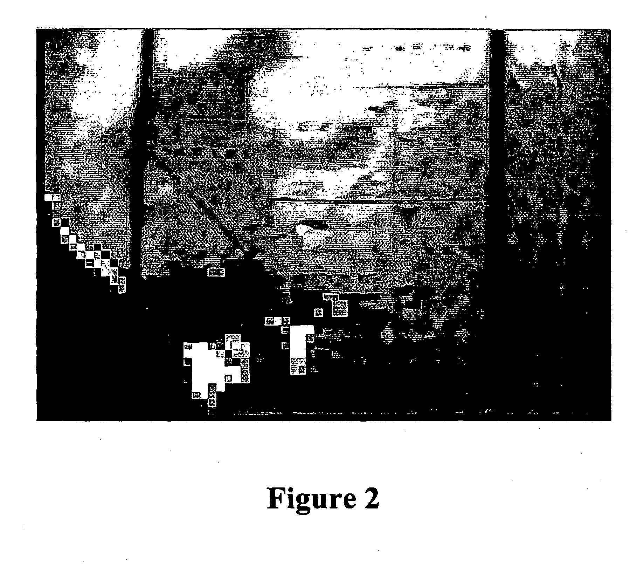

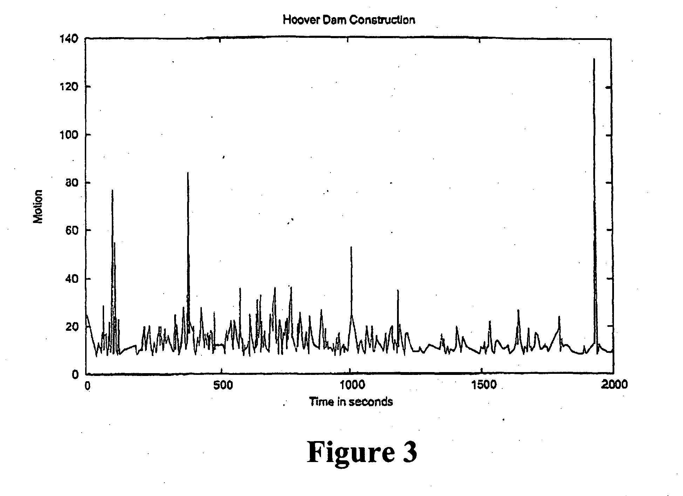

A measure of the amount of motion of each frame relative to the preceding frame is calculated by summing the differences in colour between these fames for all macro-blocks to give a single motion figure that is indicative of the relative motion between the two adjacent frames. This results in a series of numbers, each indicative of a measure of motion between two adjacent frames for a given time. These results are then scaled by mapping 18 the measurements to a 44 point scale, 0 being the lowest and 44 being the highest. After the entire video has been processed the mean motion value is calculated. This is done by summing all of the motion figures for all frames of the file and determining the average value. Motion measurements below the mean are removed, so that only peaks above the mean are extracted 20. This is done to save space and speed up matching. Then, the remaining information is used as the video motion fingerprint 22. An example of a fingerprint for the video of Figure 2 is shown in Figure 3. The peaks in this graph are portions of the video that have high levels of motion due for example to scene changes, camera panning, or close-ups of people.

Once the video motion fingerprint is created, it is stored in a database of motion fingerprints. The size of the motion fingerprints is dependent on the amount of motion that has been detected. Within experiments conducted to date, the fingerprints ranged from 1 kilobyte per minute up to 10 kilobytes per minute of video depending on the amount of motion within the video. Of course, this will vary depending on the video that is being fingerprinted.

### Detection Process

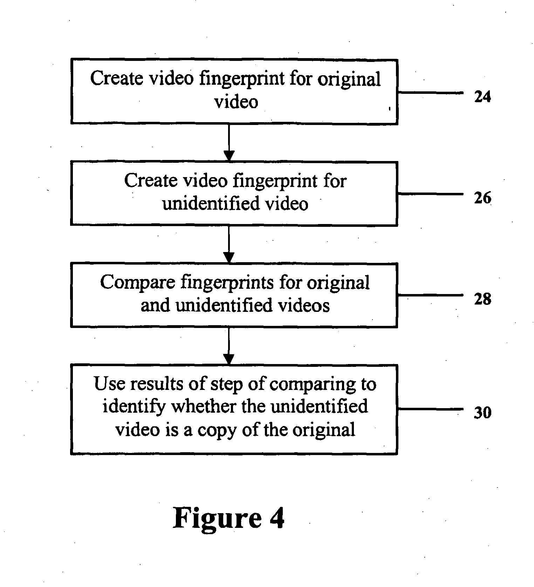

The video motion fingerprint of the present invention can be used in a detection process to identify copies of original videos. Figure 4 shows the basic steps that have to be taken. Again, these may be implemented in software or hardware.

The detection process starts by creating a motion fingerprint from the original video to be identified as described above 24. This fingerprint is stored in, for example, a database. Typically the database would include a number of fingerprints for a range of different known videos. In the event that an unknown video is captured, a fingerprint is created for it 26 and compared to the stored fingerprints for the known videos 28. Based on the comparison of the unknown and stored fingerprints, an assessment can be made as to whether the unknown video is a copy of one of the known videos 30.

The step of comparing 28 can be done using any suitable technique. In a preferred example, however, the comparison process works on three separate measurements of the video, these being the difference in length, the position of motion within the video and the difference in the magnitude of motion across the temporal plane.

The difference in length of the two videos being compared is scaled, as follows, so that small differences in movie length are unimportant:

$$length = scale(abs(fp1[fp1length] \text{-} fp2[fp2length]))$$

where *(abs(fp1[fp1length]-fp2[fp2length]))* represents the difference in length of the fingerprints of the known and unknown videos, and the scale function reduces differences of less than a minute while increasing differences for a length over a minute. Various scaling functions could be used. However in a current embodiment, the length of the videos is scaled in the following way. If the difference in length is less than 15 seconds then the difference is halved. If the difference is less than 300 seconds then it is scaled by 0.75. For less than 600 seconds the difference is taken as is, for over 1200 seconds the difference is increased by 25% and for over 1200 seconds the difference is increased by 50%.

The position of motion within the video is taken into account by considering how well the occurrences of motion within the fingerprints match in the temporal plane. This can be expressed as:

$$position = \frac{missedpoints}{checkedpoints} \times 100$$

where *checkedpoints* is the number of points within fingerprint 1 that are above the mean, and *missedpoints* is the number of measurements in fingerprint 2 that are less than the mean plus the number of points which are above the mean in fingerprint 1 but below the mean in fingerprint 2.

The difference in magnitude of the motion across the temporal plane is also taken into account. This can be expressed as:

$$temporal = \frac{\sum_{i=0}^{fp1length} abs(fp1[i] \text{-} fp2[i])}{checked\ points}$$

At each point along the fingerprint the absolute difference between the magnitude of fingerprint 1 and fingerprint 2, i.e. abs(fp1[i] - fp2[i]) is calculated. These are summed and the mean is calculated.

These three aspects of the video are summed to provide a simple similarity measurement:

$$similarity = length + position + temporal$$

The lower the similarity measurement the more closely the video files match. After experimenting it was determined that the cut off point for two fingerprints matching is 100, although of course it will be appreciated that other cut-off points may be used.

**Tests**

To test the robustness of the detection process, motion fingerprints were created for 50 high quality videos that had a range of levels of motion, and lengths from around 20 to 40 minutes. Video files of cartoons and lectures, as well as more traditional sources such as television programmes and films were included in the database. This served as the test sample. Tests were performed on a variety of transformations. For example, the video was transcoded in the following ways: change of CODEC; reduction in bit-rate; reduction in frame-rate; reduction in spatial resolution and addition of noise. The first four of these transformations are often seen when video is re-encoded for storage, such as on CDROM or for transmission over the Internet. The final transformation, addition of noise, was included since not all recordings of movies are made from 'clean' sources.

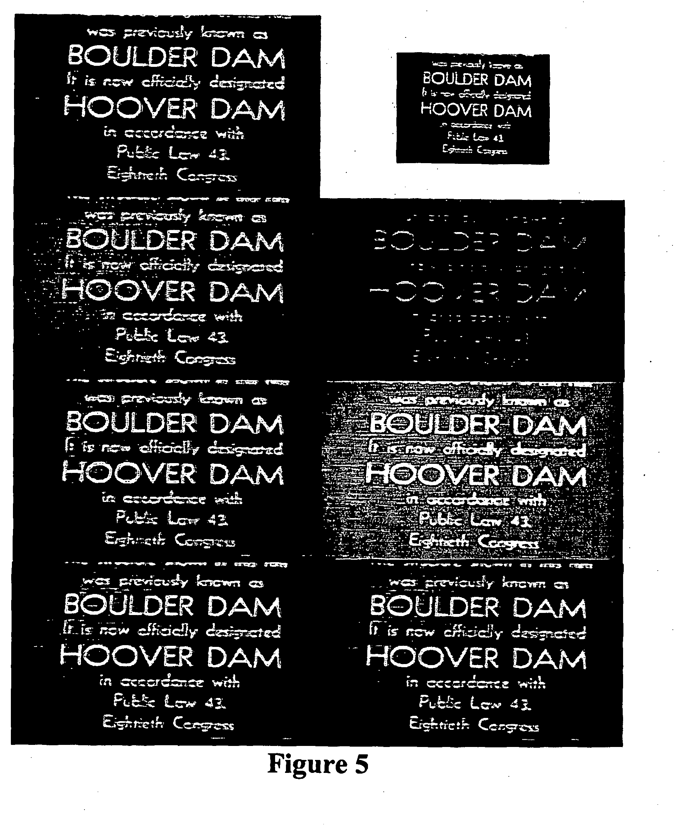

As part of the evaluation of this fingerprint technique, the video files were re-encoded to introduce conditions likely to occur in practice, such as variation in bitrate or spatial or temporal resolution. VirtualDub vl.5.1 with the Microsoft MPEG4 3688 v3 CODEC was used to perform the re-encoding. Of course any other suitable CODEC could have been used. The video was re-encoded using only single pass methods. This is because 2- and 3- pass techniques provide higher quality movie files but for most of the tests degraded video was required so spending the extra time to provide high quality degraded video did not make sense. Several examples of the types of video degradation tested against are shown in Figure 5.

Firstly it was decided to test how the method performed when identifying the original movie files. A set of fingerprints from a set of original video files (f1) was created and stored in a fingerprint database. The same video files were then taken and a new set of video fingerprints (f2) was created. It was found that each video file was correctly matched with the appropriate fingerprint in the database, typically with a difference between the fingerprints (in f1 and f2) of less than 1, whereas differences in fingerprints from different movie files were normally over 1000 with very similar files being between 100 and 1000.

Change of CODEC

The original video files were encoded using a small number of the most commonly used CODECs. The CODECs chosen were MPEG-1 and MPEG-2; MPEG-4 DivX, Xvid and MSMPEG-4, and Quicktime Sorensen. Each of these three CODEC families is typically wrapped in a different file format, .mpg, .avi and .mov respectively. The video was encoded so that the visual and temporal quality was similar to the original movie.

Using the motion finger printing method in which the invention is embodied, each of the encoded videos was correctly identified regardless of the CODEC used. This is because it is the visual quality and the ability of the motion detection algorithm to detect motion within the movie file that is central to the movie identification process.

Change of Bit-Rate

A selection of videos was taken and the image quality was degraded by re-encoding to a lower bit-rate, whilst keeping constant the frame rate and spatial resolution. In particular, the bit-rate was reduced from 500 kbps down to 25 kbps.

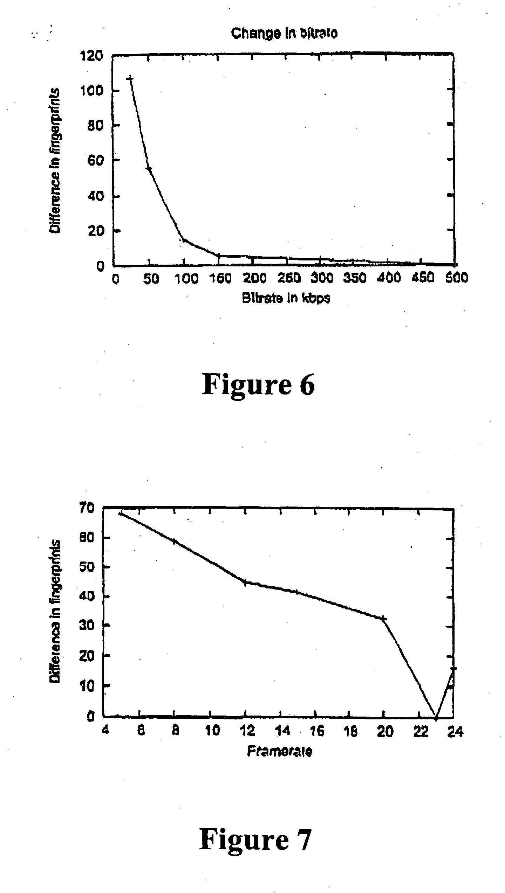

Figure 6 shows the results of the detection process as a function of frame rate. From this is can be seen that as the bit-rate reduces the ability to recognise the motion fingerprint quickly tails off after 150 kbps. When the bit-rate is below 30 kbps the ability to match the motion fingerprint is lost. However, at and below 100 kbps the recordings suffer from blockiness and encoding artefacts that make the movie file very poor quality and unlikely to be watched. Hence, for practical purposes, variations in the bit-rate will not significantly impact on the detection process.

Change of Frame Rate

In this case, the image quality for a selection of the videos was degraded by re-encoding to a lower frame-rate, whilst keeping constant the bit-rate and spatial resolution. In particular, the frame rate was taken from the original frame rate of 23 down to 4 frames per second. This limit was selected, because it is well below the point of persistence of vision, which is generally thought to be around 12 to 15 frames per second. Frame rates between 24 and 5 frames per second were used with the bit-rate and spatial resolution kept at 500 kbps and 352x240 respectively.

Figure 7 shows the results of the detection process as a function of frame-rate. As would be expected reducing the frame-rate leads to increasing differences in the motion fingerprints. Increasing the frame-rate from the original also has a slight detrimental effect on the ability to recognise the video sequence. This accounts for the increase in the difference in the fingerprints when the frame-rate is increased. Nevertheless, the results indicate that whilst varying the frame rate does have an impact it is not significant enough to mean that the video would be unrecognisable.

Spatial Resolution

The spatial resolution was reduced to 176x144 keeping the frame-rate at 23 with the bit-rate remaining at 500 kbps. Despite this, the difference in the fingerprints for the modified and original videos was only 5.1. Hence, the movie file was still recognisable, even though the spatial resolution was reduced by half.

Luminance

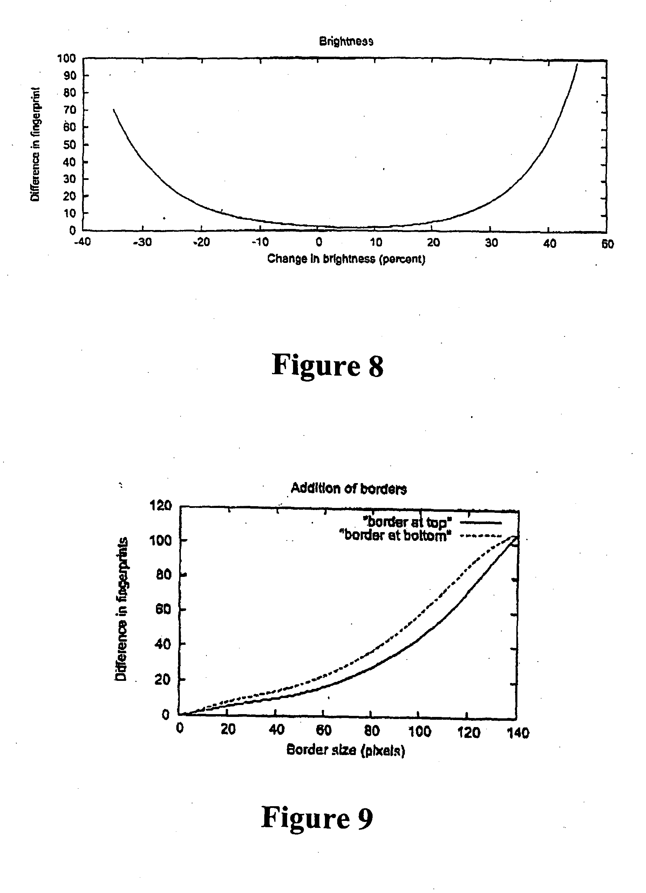

Figure 8 shows the results of the detection process as a function of brightness. From this is can be seen that reducing the brightness has more of a detrimental effect on the detection than increasing the brightness. This is because as the frame gets darker features of the video are hard to distinguish.

Addition of Noise

Noise was added to samples of the original videos using for example a NoiseGenerator, such that provided by MSU Graphics & Media. This was done to simulate the effect of noise that would be captured when recording from 'lossy' sources, such as broadcast television.

In a first test, white noise was added to the movie files and the detection process repeated. In practice, it was found that adding white noise made little difference to the ability to identify the movie file. This was unexpected. It is believed that this can be ascribed to the fact that the white noise added is not in motion and is therefore ignored by the fingerprinting technique.

As a further noise test, video stream banners were added to the video. This is the sort of thing that is normally added by television stations in order to identify themselves. There are two commonly used locations for banners or logos to be positioned, these being the top of the frame or the bottom of the frame. Black lines that stretch the width of the frame were added to the video. Motion fingerprints were generated for the new videos, which contained the banners. Then these were checked against the database of motion fingerprints to see if they could be identified. The border started at 10 pixels and went up to a 140 pixel border in 10 pixel increments.

Two separate experiments were performed, one with the border placed at the bottom of the frame and one with the border at the top. Figure 9 shows the results of the detection process for both cases as a function of border size. From this it can be seen that detection failed at around 130 pixels. However, this is a border that covers over half of the original image (the frame was 240 pixels high), which is a situation that is unlikely to be seen in normal broadcast of television programmes or films. Hence, for practical purposes, variations in the border size do not significantly impact on the detection process.

Picture Manipulation

An example of picture manipulation is colour manipulation were the colour of the video is inverted. This was performed on the example video more out of interest rather than as a condition that would normally be experienced due to re-encoding, but it does demonstrate the robustness of the technique. It was found that the inverted video is identified just as well as the non-inverted video at the same encoding parameters. Another example of picture manipulation is horizontal or vertical inversion were the movie is flipped horizontally or vertically. The test video was exposed to these conditions and this had no impact on the ability of the film to be recognised since it is the motion over the entire frame that is important.

Summary

Motion detection has been demonstrated as a basis for the generation of a video fingerprint. The technique has been shown to perform well when movies have been re-encoded from their original source and in the process degraded by loss of spatial resolution, temporal resolution or reduction in bit-rate. Although this technique cannot prevent copyright infringement within peer-to-peer networks, it may aid in its detection operating as either a peer within the network or passively at link between a private network (such as a university) and the internet using traffic monitoring techniques to acquire the data.

In practice, a plurality of video fingerprints would be stored in a suitable database for use if and when video content is detected. In the event that such content is detected, it would be captured and a motion fingerprint automatically created. This would then be compared with the fingerprints in the database to identify whether there is a match between the fingerprint of the captured video and any of the stored fingerprints. In the event that there is a match, this is indicative that the intercepted video is a copy of the original and may be a copyright infringement. If this is the case, remedial action can be taken against both the source and the intended recipient of the infringing copy.

A skilled person will appreciate that variations of the disclosed arrangements are possible without departing from the invention. For example, although a specific technique for detecting motion is described, it will be appreciated that any other video motion detection process could be used. Likewise, any suitable method for identifying differences and/or similarities between two fingerprints could be used. In addition, to reduce the amount of time that it takes to identify a video, for example a movie, one option would be to perform fingerprinting and subsequent identification on small 'blocks' of the movie, rather than on the entire content. These blocks would take the form of 'scenes' where scenes are defined as a section of video between two portions of video that do not have motion. This would allow identification of video from smaller portions of the movie. As yet a further variation, while the fingerprints described above are created by identifying the temporal position of motion peaks within a video, another option would be to use the relative magnitudes of the motion peaks as the fingerprint. Accordingly the above description of the specific embodiment is made by way of example only and not for the purposes of limitation.

It will be clear to the skilled person that minor modifications may be made without significant changes to the operation described.

**Claims**

1. A method for identifying video using motion fingerprints created using a measure of luminance of pixels or blocks of pixels of a first frame of a video with a corresponding measure of luminance of pixels or blocks of pixels of a second frame of the video; identifying differences between the luminance for like pixels or blocks of the two frames and using this to determine a motion figure indicative of the relative motion between the two frames for a given time; and repeating this for a plurality of frame pairs, to provide a series of motion figures each indicative of a measure of motion between frames for a given time, wherein the motion fingerprint is created using the motion figures as a function of time, the method for identifying video involving:

   creating a motion fingerprint for an unknown video (26);
   comparing the motion fingerprint of the unknown video with one or more motion fingerprints of one or more known videos (28), and
   identifying whether the unknown video is the same as any one of the or each known videos based on the step of comparing (30),
   wherein each motion fingerprint provides motion position information and motion magnitude information and comparing known and unknown fingerprints (28) involves comparing the position of motion in both fingerprints as a function of time to provide a position similarity measure and comparing the motion magnitude as a function of time to provide a magnitude similarity measure, and using both the position and magnitude measures to provide a similarity measure indicative of similarity between the fingerprints.

2. A method as claimed in claim 1 wherein an average value of motion magnitude is determined and comparing the fingerprints involves comparing only points with an above average motion magnitude.

3. A method as claimed in claim 1 or claim 2 wherein comparing the known and unknown fingerprints (28) involves determining a difference in length of the fingerprints, and scaling that difference using a scale function that depends on a value of the difference, wherein the scaled value is used together with the position and magnitude measures to provide a similarity measure.

4. A method as claimed in claim 3 wherein the scale function reduces differences of less than predetermined value and increases differences for a length over predetermined value.

5. A method as claimed in claim 4 wherein if the difference in length is less than 15 seconds then the scale function is 0.5.

6. A method as claimed in claim 4 wherein if the difference is in the range 15-300 seconds then the scale function is 0.75.

7. A method as claimed in claim 4 wherein if the difference is in the range 300-600 seconds then the scale function is 1.

8. A method as claimed in claim 4 wherein if the difference is in the range of 600-1200 seconds then the scale function is 1.25.

9. A method as claimed in claim 4 wherein if the difference is over 1200 seconds the scale function is 1.5.

10. A method as claimed in any of the preceding claims wherein the position measure is determined according to:

$$position = \frac{missedpoints}{checkedpoints}$$

where *checkedpoints* is the number of points within the known fingerprint that are above the mean, and *missedpoints* is the number of measurements in the unknown fingerprint that are less than the mean plus the number of points which are above the mean in the known fingerprint but below the mean in the unknown fingerprint.

11. A method as claimed in any of the preceding claims wherein the magnitude measure is determine according to:

$$temporal = \frac{\sum_{i=0}^{fp\backslash length} abs(fp1[i] - fp2[i])}{checked\ points}$$

where abs(fp1[i]-fp2[i]) represents the absolute difference in magnitude for each checked point and checked points is the number of points checked.

12. A method as claimed in any of the preceding claims wherein a threshold for the similarity measure is set, which threshold is used to determine whether the fingerprint of an unknown video is matched with the corresponding fingerprint of a known video.

13. A system for identifying an unknown video using motion fingerprints created using a measure of luminance of pixels or blocks of pixels of a first frame of a video with a corresponding measure of luminance of pixels or blocks of pixels of a second frame of the video; identifying differences between the luminance for like pixels or blocks of the two frames and using this to determine a motion figure indicative of the relative motion between the two frames for a given time; and repeating this for a plurality of frame pairs, to provide a series of motion figures each indicative of a measure of motion between frames for a given time, wherein the motion fingerprint is created using the motion figures as a function of time, the system comprising means for creating a motion fingerprint for the unknown video; means for comparing the motion fingerprint of the unknown video to one or more motion fingerprints for known videos, and means for identifying whether the unknown video is the same as one of the known videos based on the step of comparing, wherein each fingerprint provides motion position information and motion magnitude information and the means for comparing the fingerprints are operable to compare the position of motion in both fingerprints as a function of time to provide a position similarity measure and compare the motion magnitude as a function of time to provide a magnitude similarity measure, and use both the position and magnitude measures to provide a similarity measure indicative of similarity between the fingerprints.

14. A system as claimed in claim 13 that is operable to capture unknown video from internet traffic.

**Patentansprüche**

1. Verfahren zum Identifizieren von Video unter Verwendung von Bewegungsfingerabdrücken, die unter Verwendung eines Luminanzmaßes von Pixeln oder Blöcken von Pixeln eines ersten Bildes eines Videos mit einem entsprechenden Luminanzmaß von Pixeln oder Blöcken von Pixeln eines zweiten Bildes des Videos erstellt werden; Identifizieren von Unterschieden zwischen der Luminanz für ähnliche Pixel oder Blöcke der beiden Bilder, und Verwenden davon zum Bestimmen eines Bewegungswerts, der für die relative Bewegung zwischen den beiden Bildern für einen bestimmten Zeitraum indikativ ist; und Wiederholen dieses Schritts mit einer Mehrzahl von Bilderpaaren, um eine Reihe von Bewegungswerten vorzusehen, die jeweils für ein Bewegungsmaß zwischen Bildern für einen bestimmten Zeitraum indikativ sind, wobei der Bewegungsfingerabdruck unter Verwendung der Bewegungswerte als Funktion der Zeit erstellt wird, wobei das Verfahren zum Identifizieren von Video umfasst:

Erstellen eines Bewegungsfingerabdrucks für ein unbekanntes Video (26):

Vergleichen des Bewegungsfingerabdrucks des unbekannten Videos mit einem oder mehreren Bewegungsfingerabdrücken eines oder mehrerer bekannter Videos (28): und

Identifizieren, ob das unbekannte Video einem oder jedem der bekannten Videos gleicht, wobei dies auf dem Schritt des Vergleichens (30) basiert,

wobei jeder Bewegungsfingerabdruck Informationen zur Bewegungsposition und Informationen zur Bewegungsgrößenordnung liefert, und wobei das Vergleichen bekannter und unbekannter Fingerabdrücke (28) das Vergleichen der Bewegungsposition in beiden Fingerabdrücken als Funktion der Zeit, um ein Positionsähnlichkeitsmaß bereitzustellen, und das Vergleichen der Bewegungsgrößenordnung als Funktion der Zeit, um ein Größenordnungsähnlichkeitsmaß bereitzustellen, und das Verwenden sowohl des Positions- als auch Größenordnungsmaßes, um ein Ähnlichkeitsmaß bereitzustellen, das für eine Ähnlichkeit zwischen den Fingerabdrükken indikativ ist, umfasst.

2. Verfahren nach Anspruch 1, wobei ein Durchschnittswert der Bewegungsgrößenordnung bestimmt wird, und wobei das Vergleichen der Fingerabdrücke das Vergleichen lediglich von Punkten mit einer Bewegungsgrößenordnung über dem Durchschnitt umfasst.

3. Verfahren nach Anspruch 1 oder 2, wobei das Vergleichen der bekannten und unbekannten Fingerabdrücke (28) das Bestimmen eines Unterschieds in der Länge der Fingerabdrücke und das Skalieren dieses Unterschieds unter Verwendung einer Skalierungsfunktion umfasst, die von einem Wert des Unterschieds abhängt, wobei der skalierte Wert gemeinsam mit dem Positions- und Größenordnungsmaß verwendet wird, um ein Ähnlichkeitsmaß bereitzustellen.

4. Verfahren nach Anspruch 3, wobei die Skalierungsfunktion Unterschiede, die unter einem vordefinierten Wert liegen, verringert und Unterschiede für eine Länge über einem vordefinierten Wert erhöht.

5. Verfahren nach Anspruch 4, wobei, wenn der Unterschied in der Länge weniger als 15 Sekunden beträgt, die Skalierungsfunktion 0,5 ist.

6. Verfahren nach Anspruch 4, wobei, wenn der Unterschied im Bereich von 15 bis 300 Sekunden liegt, die Skalierungsfunktion 0,75 ist.

7. Verfahren nach Anspruch 4, wobei, wenn der Unterschied im Bereich von 300 bis 600 Sekunden liegt, die Skalierungsfunktion 1 ist.

8. Verfahren nach Anspruch 4, wobei, wenn der Unterschied im Bereich von 600 bis 1200 Sekunden liegt, die Skalierungsfunktion 1,25 ist.

9. Verfahren nach Anspruch 4, wobei, wenn der Unterschied über 1200 Sekunden liegt, die Skalierungsfunktion 1,5 ist.

10. Verfahren nach einem der vorherigen Ansprüche, wobei das Positionsmaß wie folgt bestimmt wird:

$$Position = \frac{verfehlte\ Punkte}{geprüfte\ Punkte}$$

wobei *"geprüfte Punkten"* die Anzahl von Punkten innerhalb des bekannten Fingerabdrucks, die über dem Durchschnitt liegen, ist und *"verfehlte Punkte"* die Anzahl von Messungen im unbekannten Fingerabdruck, die unter dem Durchschnitt liegen, plus die Anzahl von Punkten ist, die über dem Durchschnitt im bekannten Fingerabdruck, jedoch unter dem Durchschnitt im unbekannten Fingerabdruck liegen.

11. Verfahren nach einem der vorherigen Ansprüche, wobei das Größenordnungsmaß wie folgt bestimmt wird:

$$zeitliches\ Verhältnis = \frac{\sum_{i=0}^{fp\,/\,L\ddot{a}nge} abs(fp1[i]\ fp2[i])}{gepr\ddot{u}fte\ Punkte}$$

wobei "abs(fp1[i] fp2[i])" den absoluten Unterschied in der Größenordnung für jeden geprüften Punkt repräsentiert, und "geprüfte Punkte" die Anzahl von geprüften Punkten repräsentiert.

12. Verfahren nach einem der vorherigen Ansprüche, wobei ein Grenzwert für das Ähnlichkeitsmaß gesetzt wird, der verwendet wird, um zu bestimmen, ob der Fingerabdruck eines unbekannten Videos mit dem entsprechenden Fingerabdruck eines bekannten Videos übereinstimmt.

13. System zum Identifizieren eines unbekannten Videos unter Verwendung von Bewegungsfingerabdrücken, die unter Verwendung eines Luminanzmaßes von Pixeln oder Blöcken von Pixeln eines ersten Bildes eines Videos mit einem entsprechenden Luminanzmaß von Pixeln oder Blöcken von Pixeln eines zweiten Bildes des Videos erstellt werden; Identifizieren von Unterschieden zwischen der Luminanz für ähnliche Pixel oder Blöcke der beiden Bilder, und Verwenden davon zum Bestimmen eines Bewegungswerts, der für die relative Bewegung zwischen den beiden Bildern für einen bestimmten Zeitraum indikativ ist; und Wiederholen dieses Schritts mit einer Mehrzahl von Bilderpaaren, um eine Reihe von Bewegungswerten vorzusehen, die jeweils für ein Bewegungsmaß zwischen Bildern für einen bestimmten Zeitraum indikativ sind, wobei der Bewegungsfingerabdruck unter Verwendung der Bewegungswerte als Funktion der Zeit erstellt wird, wobei das System Mittel zum Erstellen eines Bewegungsfingerabdrucks für das unbekannte Video; Mittel zum Vergleichen des Bewegungsfingerabdrucks des unbekannten Videos mit einem oder mehreren Bewegungsfingerabdrücken für bekannte Videos; und Mittel zum Identifizieren, ob das unbekannte Video einem der bekannten Videos gleicht, wobei dies auf Basis des Schrittes des Vergleichens erfolgt, umfasst, wobei jeder Fingerabdruck Informationen zur Bewegungsposition und Informationen zur Bewegungsgrößenordnung liefert, und wobei die Mittel zum Vergleichen der Fingerabdrücke betriebsfähig sind, um die Bewegungsposition bei beiden Fingerabdrücken als Funktion der Zeit zu vergleichen, um ein Positionsähnlichkeitsmaß bereitzustellen, und um die Bewegungsgrößenordnung als Funktion der Zeit zu vergleichen, um ein Größenordnungsähnlichkeitsmaß bereitzustellen, und um sowohl das Positions- als auch das Größenordnungsmaß zu verwenden, um ein Ähnlichkeitsmaß zu liefern, das für eine Ähnlichkeit zwischen Fingerabdrücken indikativ ist.

14. Verfahren nach Anspruch 13, das zum Erfassen eines unbekannten Videos aus dem Internetdatenverkehr betriebsfähig ist.

**Revendications**

1. Procédé pour identifier une vidéo en faisant appel à des empreintes de mouvement créées en utilisant une mesure de luminance de pixels ou de blocs de pixels d'une première trame d'une vidéo avec une mesure correspondante de luminance de pixels ou de blocs de pixels d'une seconde trame de la vidéo ; identifier les différences entre la luminance de pixels ou blocs similaires des deux trames et utiliser cela pour déterminer une mesure de mouvement représentative du mouvement relatif entre les deux trames pour un temps donné ; et répéter cette opération pour une pluralité de paires de trames, pour fournir une série de mesures de mouvement dont chacune est représentative d'une mesure de mouvement entre les trames pour un temps donné, dans lequel l'empreinte de mouvement est créée en utilisant les mesures de mouvement en fonction du temps, le procédé d'identification de vidéo comportant les étapes ci-dessous consistant à :

créer une empreinte de mouvement pour une vidéo inconnue (26) ;
comparer l'empreinte de mouvement de la vidéo inconnue à une ou plusieurs empreintes de mouvement d'une ou de plusieurs vidéos connues (28) ; et
déterminer si la vidéo inconnue est la même que l'une quelconque ou que chacune des vidéos connues, sur la base de l'étape de comparaison (30) ;
dans lequel chaque empreinte de mouvement fournit des informations de position de mouvement et des informations d'amplitude de mouvement et l'étape de comparaison des empreintes connues et inconnues (28) implique l'étape consistant à comparer la position de mouvement dans les deux empreintes en fonction du temps pour fournir une mesure de similarité de position et comparer l'amplitude de mouvement en fonction du temps pour fournir une mesure de similarité d'amplitude, et utiliser les mesures de position et d'amplitude pour fournir une mesure de similarité représentative de similarités entre les empreintes.

2. Procédé selon la revendication 1, dans lequel une valeur moyenne d'amplitude de mouvement est déterminée, et l'étape de comparaison des empreintes comporte l'étape consistant à comparer uniquement les points présentant une amplitude de mouvement supérieure à la moyenne.

3. Procédé selon la revendication 1 ou 2, dans lequel l'étape de comparaison des empreintes connues et inconnues (28) comporte l'étape consistant à déterminer une différence en longueur des empreintes, et mettre à l'échelle cette différence en utilisant une fonction de mise à l'échelle qui dépend d'une valeur de la différence, dans laquelle la valeur mise à l'échelle est utilisée conjointement avec les mesures de position et d'amplitude pour fournir une mesure de similarité.

4. Procédé selon la revendication 3, dans lequel la fonction de mise à l'échelle réduit les différences pour une longueur inférieure à la valeur prédéterminée et augmente les différences pour une longueur supérieure à la valeur prédéterminée.

5. Procédé selon la revendication 4, dans lequel, lorsque la différence en longueur est inférieure à 15 secondes, alors la fonction de mise à l'échelle est égale à 0,5.

6. Procédé selon la revendication 4, dans lequel, lorsque la différence se situe dans la fourchette 15 - 300 secondes, alors la fonction de mise à l'échelle est égale à 0,75.

7. Procédé selon la revendication 4, dans lequel lorsque la différence se situe dans la fourchette 300 - 600 secondes, alors la fonction de mise à l'échelle est égale à 1.

8. Procédé selon la revendication 4, dans lequel lorsque la différence se situe dans la fourchette 600 - 1 200 secondes, alors la fonction de mise à l'échelle est égale à 1,25.

9. Procédé selon la revendication 4, dans lequel, lorsque la différence est supérieure à 1 200 secondes, la fonction de mise à l'échelle est égale à 1,5.

10. Procédé selon l'une quelconque des revendications précédentes, dans lequel la mesure de position est déterminée selon l'équation ci-dessous :

$$position = \frac{points\ manqués}{points\ vérifiés}$$

où « *points vérifés* » est le nombre de points dans l'empreinte connue qui sont supérieurs à la moyenne, et « *points manqués* » est le nombre de mesures dans l'empreinte inconnue qui sont inférieurs à la moyenne, plus le nombre de points qui sont supérieurs à la moyenne dans l'empreinte connue, mais inférieurs à la moyenne dans l'empreinte inconnue.

11. Procédé selon l'une quelconque des revendications précédentes, dans lequel la mesure d'amplitude est déterminée selon l'équation ci-dessous :

$$relation\ temporelle = \frac{\sum_{i=0}^{fp\ /\ longueur} abs(fp1[i]\ fp2[i])}{points\ vérifiés}$$

où abs(fp1[i] fp2[i]) représente la différence absolue en amplitude pour chaque point vérifié et « *points vérifiés* » est le nombre de points vérifiés.

12. Procédé selon l'une quelconque des revendications précédentes, dans lequel un seuil pour la mesure de similarité est défini, lequel seuil est utilisé pour déterminer si l'empreinte d'une vidéo inconnue correspond à l'empreinte correspondante d'une vidéo connue.

13. Système pour identifier une vidéo inconnue en faisant appel à des empreintes de mouvement créées en utilisant une mesure de luminance de pixels ou de blocs de pixels d'une première trame d'une vidéo avec une mesure correspondante de luminance de pixels ou de blocs de pixels d'une seconde trame de la vidéo ; identifier les différences entre la luminance de pixels ou blocs similaires des deux trames et utiliser cela pour déterminer une mesure de mouvement représentative du mouvement relatif entre les deux trames pour un temps donné ; et répéter cette opération pour une pluralité de paires de trames, pour fournir une série de mesures de mouvement dont chacune est représentative d'une mesure de mouvement entre les trames pour un temps donné, dans lequel l'empreinte de mouvement est créée en utilisant les mesures de mouvement en fonction du temps, le système comportant un moyen pour créer une empreinte de mouvement pour une vidéo inconnue ; un moyen pour comparer l'empreinte de mouvement de la vidéo inconnue à une ou plusieurs empreintes de mouvement de vidéos connues ; et un moyen pour déterminer si la vidéo inconnue est la même que l'une des vidéos connues, sur la base de l'étape de comparaison ; dans lequel chaque empreinte de mouvement fournit des informations de position de mouvement et des informations d'amplitude de mouvement et le moyen de comparaison des empreintes est exploitable pour comparer la position de mouvement dans les deux empreintes en fonction du temps pour fournir une mesure de similarité de position et comparer l'amplitude de mouvement en fonction du temps pour fournir une mesure de similarité d'amplitude, et utiliser les mesures de position et d'amplitude pour fournir une mesure de similarité représentative de similarités entre les empreintes.

**14.** Système selon la revendication 13, lequel est exploitable pour capturer une vidéo inconnue à partir du trafic Internet.

Figure 1

**Figure 2**

Figure 3

Figure 4

**Figure 5**

**Figure 6**

**Figure 7**

**Figure 8**

**Figure 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0251063 A

- US 20030185417 A

### Non-patent literature cited in the description

- **Langelaar et al.** Real-time labelling of MPEG-2 compressed video. *Journal of Visual Communication and Image Representation,* 1998, vol. 9 (4), 256-270
- **Hartung et al.** Watermarking of uncompressed and compressed video. *Signal Processing,* 1998, vol. 66 (3), 283-216

- Spread Spectrum Watermarking: Malicious attacks and counter attacks. *SPIE Security and Watermarking of Multimedia Contents 99,* 1999
- Attacks on Copyright Marking Systems. **Petitcolas et al.** Information Hiding, Second International Workshop IH '98. Springer-Verlag, 1998, 219-239